# EUROPÄISCHE PATENTSCHRIFT

(11) **EP 1 651 940 B1**
(45) Veröffentlichungstag und Bekanntmachung des Hinweises auf die Patenterteilung: **26.10.2011**
(21) Anmeldenummer: 04763160.1
(22) Anmeldetag: 10.07.2004
(51) Int. Cl.: G01M 17/007

(54) **VORRICHTUNG ZUR STATIONÄREN PRÜ FUNG VON FAHRZEUGEN**
DEVICE FOR THE STATIONARY INSPECTION OF VEHICLES
DISPOSITIF UTILISE POUR LE CONTROLE STATIONNAIRE DES VEHICULES

(30) Priorität: 25.07.2003 DE 10334043
(43) Veröffentlichungstag der Anmeldung: 03.05.2006
(73) Patentinhaber: HORIBA Europe GmbH, 64293 Darmstadt (DE)
(72) Erfinder: FREITAG, Gernot, 64295 Darmstadt (DE); OSWALD, Johannes, 63897 Mittenberg (DE)
(74) Vertreter: Behrens, Helmut
(86) Internationale Anmeldenummer: PCT/EP2004/007625
(87) Internationale Veröffentlichungsnummer: WO 2005/015150

(56) Entgegenhaltungen:
- EP-A- 0 246 345
- EP-A- 0 373 653
- EP-A- 1 253 416
- WO-A-98/44325
- US-A- 4 077 255

## Beschreibung

Die Erfindung betrifft eine Vorrichtung zur stationären Prüfung von Fahrzeugen gemäß dem Oberbegriff des Patentanspruchs 1.

Derartige Vorrichtungen werden seit vielen Jahren vorzugsweise in der Automobilindustrie eingesetzt, um Fahrzeuge stationär in Fahrversuchen zu testen. Dabei haben sich insbesondere Fahrzeugprüfstände bewährt, die als sogenannte Rollenprüfstände ausgebildet sind. Diese weisen meist Rollengrößen von 508 mm (20") bis 1829 mm (72") Rollendurchmesser auf, auf denen mindestens die Antriebsräder der Fahrzeuge positioniert werden. Die Hauptanwendung derartiger Rollenprüfstände ist die Messung von Drehmoment und Leistung eines Fahrzeugs sowie die Simulation von Fahrzuständen. Insbesondere zur Ermittlung des Abgasverhaltens werden heute derartige Rollenprüfstände eingesetzt, durch die Kräfte simuliert werden, die auf die Antriebsräder eines Fahrzeugs wirken und einer tatsächlichen Fahrstrecke eines Fahrzeugs auf der Straße nachgebildet sind. Um einen großen Anwendungsbereich auf derartigen Prüfständen zu ermöglichen, sollten diese Prüfstände für Fahrzeuge mit Fahrzeuggewichten bis zu 2.500 kg, Fahrzeugbreiten bis 2 m und Spurweiten ab 110 cm geeignet sein. Vielfach sollen auf derartigen Prüfständen auch motorisierte Zweiradfahrzeuge mit hoher Meßgenauigkeit geprüft werden, so daß auch besondere Anforderungen an die Simulation geringer Fahrzeugmassen unter Berücksichtigung der speziellen Abmessungen gestellt werden.

Aus der EP 0 655 617 B1 ist ein Rollenprüfstand bekannt, der in einer vorgeschlagenen Ausführung eine Laufrolle aufweist, die mit einem seitlich angeordneten Motor verbunden ist. Ein derartiger Rollenprüfstand ist zu einer Prüfung von Motorrädern mit einem Antriebsrad geeignet. Die Laufrolle besitzt einen Durchmesser, der offenbar ein Mehrfaches des Fahrzeugraddurchmessers von ca. 1219 mm (48") beträgt. Da die Fahrzeuge bei stationären Prüfständen ebenerdig angefahren werden, erfordern derartige Prüfstände eine verhältnismäßig tiefe Baugrube, um die großen Laufrollen befahrbar unterzubringen. Der gekoppelte Motor bzw. die elektrische Maschine ist über eine starre Antriebswelle seitlich neben der Laufrolle angebracht. Da die Motorwelle mit der Drehachse der Laufwelle fluchtet, muß auch der Motor unterflur in der Baugrube angeordnet werden. Ein derartiger Rollenprüfstand ist deshalb nur in einem verhältnismäßig großen umbauten Raum zu stationieren und erfordert insbesondere noch für die Unterflurunterbringung erhebliche bautechnische Maßnahmen, die den Kostenaufwand für den Einrollenprüfstand erheblich erhöhen.

Bei einer weiteren Ausbildungsart ist aus der EP 0 655 617 ein Doppelrollenprüfstand für einachsig angetriebene Kraftfahrzeuge bekannt, bei dem beide Laufrollen mit einem seitlich angeordneten Motor gekoppelt sind. Dabei ist der gemeinsame Motor über eine fluchtende starre Welle mit den beiden Laufrollen verbunden. Auch diese Ausführungsart hat den Nachteil, daß durch den hohen Platzbedarf erhebliche Hochbaumaßnahmen zur stationären Unterbringung erforderlich sind, die die Gesamtkosten für einen derartigen Prüfstand erheblich erhöhen. Deshalb werden in jüngster Zeit häufig Rollenprüfstände mit einem sogenannten Mittelmotor eingesetzt, wie er auch bereits als eine weitere spezielle Ausführung aus der EP 0 655 617 B1 bekannt ist. Bei dieser speziellen Mittelmotorausführung ist die elektrische Maschine zwischen den beiden Pxüfstandsrollen vorgesehen, so daß sich der Bauaufwand gegenüber der seitlichen Motorausführung erheblich vermindern läßt. Allerdings sind bei diesem Prüfstand die Drehmomentaufnehmer zwischen der Antriebswelle und der Rollenfelge fest angeordnet, so daß diese im Schadensfall nur schwer zugänglich sind und häufig eine gesamte Demontage der Laufrollen und des Mittelmotors erfordern.

Aus der DE 199 00 620 A1 ist ebenfalls ein Rollenprüfstand bekannt, der zwischen den Prüfstahdsrollen einen Mittelmotor aufweist. Allerdings ist der Mittelmotor pendelnd gelagert und stützt sich auf einer Kraftmeßdose ab, durch die die zu messenden Momente erfaßt werden. Dazu ist am Statorgehäuse des Mittelmotors ein seitlicher Ansatz mit einer Kraftmeßdose angebracht, die sich gegenüber einem ortsfesten Rahmen über eine Kolbenstange abstützt. Allerdings beansprucht der Mittelmotor den gesamten Platz zwischen den Laufrollen, so daß ein derartiger Prüfstand wegen der maximal zulässigen Motorgröße in seiner Prüfleitung nach oben begrenzt ist. Teilweise ist es auch notwendig, den Raum zwischen den Laufrollen für Messungen am Fahrzeugboden oder zur Montage von Einrichtungen zur Klimatechnik zu nutzen, so daß in diesen Fällen nur Prüfstände mit seitlich außenliegenden Maschinen einsetzbar sind.

Ein Rollenprüfstand für Kraftfahrzeuge ist aus der EP 1 253 416 A2 bekannt, bei dem das Antriebsaggregat jeweils in der Aufstandsrolle integxiert ist. Dazu ist die Aufstandsrolle auf einer Mittelachse drehbar gelagert, an der gleichzeitig der Stator des Antriebsaggregates befestigt ist. Gegenüberliegend zum Stator ist an der Aufstandsrolle der Rotor als Aussenläufer am Innenmantel der Aufstandsrolle angebracht. Diese Anordnung des Antriebsaggregats in der Aufstandsrolle soll insbesondere zur Verminderung der Geräuschimmission und des Wartungsaufwandes vorteilhaft sein, wobei aus dieser Druckschrift eine nähere Ausgestaltung des Stators und des Aussenläufers nicht erkennbar ist. Auch aus der US 4 077 255 A, der EP 0246354 A1 und der WO 98/44325 A1 sind ebenfalls Rollenprüfstände bekannt, in deren Aufstandsrolle je ein Antriebsaggregat integriert ist, dessen Stator an der Lagerwelle und dessen Rotor an der gegenüberliegenden inneren Wandung der Aufstandsrolle befestigt ist. Allen Antriebsaggregaten ist gemeinsam, dass sie nahezu die gesamte Breite und Querschnitt des Innenraums der Aufstandsrolle ausfüllen, und damit keine besonders platzsparende Bauweise aufweisen.

Der Erfindung liegt deshalb die Aufgabe zugrunde, einen Fahrzeugprüfstand zu schaffen, der mit minimalen Bauraum auskommt, für Servicezwecke gut zugänglich und für einen breiten Einsatzbereich geeignet ist.

Diese Aufgabe wird durch die in Patentanspruch 1 angegebene Erfindung gelöst. Weiterbildungen und vorteilhafte Ausführungsbeispiele der Erfindung sind in den Unteransprüchen angegeben.

Die Erfindung hat den Vorteil, daß durch die Integration der elektrischen Maschine in einer der Laufrollen kein separater Bauraum für die elektrische Maschine notwendig ist. Dadurch kann gleichzeitig auch der Raum zwischen und neben den Laufrollen für Einrichtungen der Klimatechnik oder für Servicezwecke und dergleichen genutzt werden. Eine derartige Vorrichtung zur Prüfung von Fahrzeugen mit motorintegrierten Rollen kann auch modulartig ausgebildet sein, so daß Rollenprüfstände mit 1 bis 4 Rollen beliebig zusammenstellbar sind, die zur Prüfung von Motorrädern, Personenkraftwagen mit Zwei- und Vierradantrieb und auch für Spezialfahrzeuge geeignet sind. Mit derartigen Laufrollenmodulen können auch Prüfstände mit hoher Maschinenleistung und geringen Spurweiten realisiert werden, so daß ein derartiger Prüfstand für eine Vielzahl unterschiedlicher Fahrzeugausführungen und -größen geeignet ist.

Bei einer besonderen Ausführung der Erfindung ist vorgesehen, in eine Laufrolle eine selbsterregte Synchronmaschinen zu integrieren, mit der vorteilhafterweise besonders hohe Leistungsdichten erreichbar sind. Dadurch sind in den zur Verfügung stehenden Innenraum einer Laufrolle Maschinen integrierbar, die zum Antrieb bzw. zur Belastung auch von zwei Laufrollen ausreichen, so daß bei einem Doppelrollenprüfstand die gegenüberliegende Laufrolle lediglich über eine Antriebswelle mit der motorintegrierten Laufrolle verbunden sein muß. Bei der Verwendung zweier Laufrollen mit integrierten Maschinen kann vorteilhafterweise die Prüfstandsleistung gegenüber der Mittelmotorversion verdoppelt werden, ohne daß eine größere Baugrube erforderlich ist und Platzprobleme zwischen den Laufrollen auftreten. Da mit doppeltem Antrieb bzw. doppelter Belastung beide Maschinen auch separat gesteuert werden können, sind dadurch auch höhere Prüfgenauigkeiten und die Simulation von Kurvenfahrten möglich.

Durch die spezielle Ausführung der Erfindung mit einem selbsterregten Rotorteil als Bestandteil einer Laufrolle und eines stromführenden Stators innerhalb der Laufrolle wurde vorteilhafterweise eine verschleiß- und wartungsarme Prüfvorrichtung mit integrierter Synchronmaschine geschaffen. Diese ist insbesondere bei einseitiger Lagerung der Drehachse an nur einer Rollenöffnungsseite seitlich gut zugänglich und daher ist auch die Motorseite sowohl zum Innen- als auch zum Außenbereich des Prüfstandes ausrichtbar, so daß die Zugänglichkeit gut auf die Platzverhältnisse abstimmbar ist. Ein derartig ausgeführter Synchronmotor ist im Prüfbetrieb auch sehr geräuscharm, so daß vorteilhafterweise auch ohne großen Schallschutzaufwand akustische Fahrzeugprüfungen durchführbar sind.

Durch die Lagerung des Stators auf dem selbsterregten Läufer bzw. dessen Drehwelle ist vorteilhafterweise innerhalb des Felgenraums der Laufrolle eine pendelnd aufgehängte Belastungsmaschine realisierbar, die auf einfache Weise sich seitlich auf eine Kraftmeßvorrichtung abstützen läßt und die damit im Service- oder Schadensfall leicht einstellbar oder austauschbar ist.

Bei einer weiteren speziellen Ausbildung der Erfindung ist ein optimiertes Kühlsystem zur Abführung der Verlustwärme des Motors möglich. Dazu wird vorteilhafterweise eine Wasserkühlung vorgesehen, die aufgrund der räumlichen Nähe des Stators zur Laufrolle auch eine Temperaturstabilisierung der Laufrolle ermöglicht, so daß insbesondere bei Klimaversuchen bei großen Temperaturänderungen Ausdehnungsunterschiede an den Laufrollen vermieden werden können, wodurch sich die Meßgenauigkeit erhöhen läßt.

Die Erfindung wird anhand eines Ausführungsbeispiels, das in der Zeichnung dargestellt ist, näher erläutert. Es zeigen:
- Fig. 1:: eine perspektivische seitliche Darstellung eines Prüfstandsmoduls, und
- Fig. 2:: eine perspektivische vordere Darstellung des Prüfstandsmoduls.

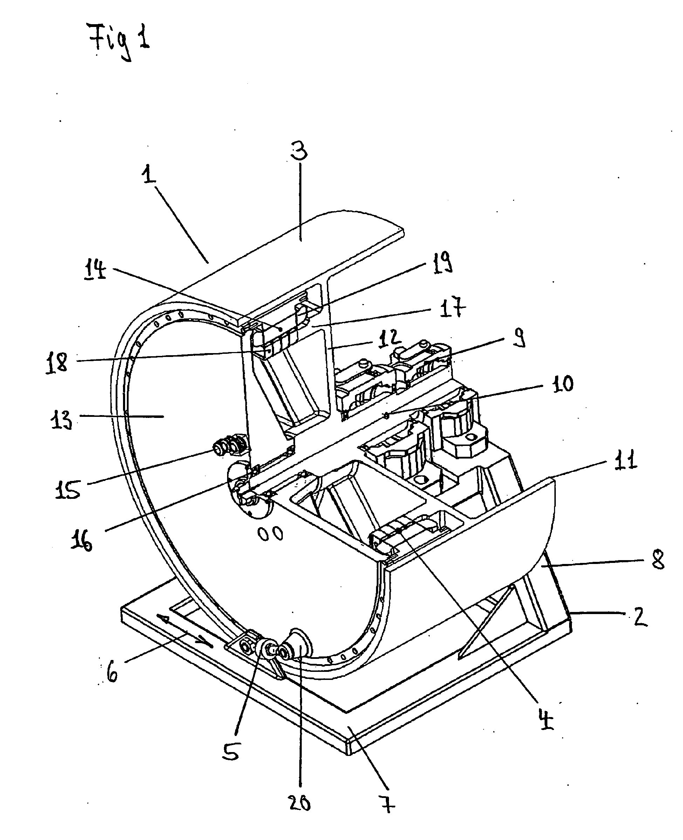

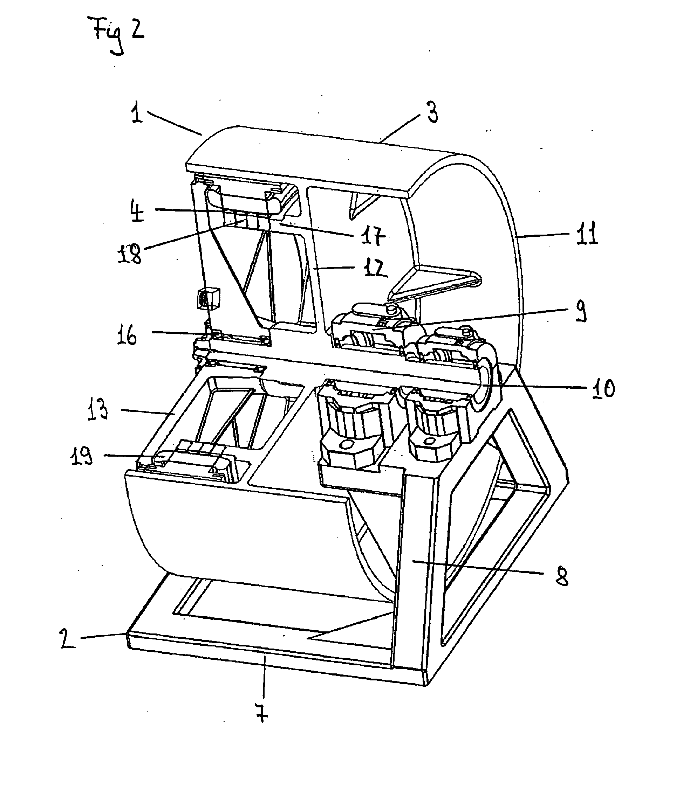

In Fig. 1 und Fig. 2 der Zeichnung ist ein Laufrollenmodul als Vorrichtung zur stationären Prüfung von Fahrzeugen perspektivisch von zwei unterschiedlichen Seiten dargestellt, das im wesentliche aus einem Tragrahmen 2, einer Laufrolle 3 mit integrierter elektrischer Maschine 4 und einem Kraftaufnehmer 5 als Drehmomentmeßvorrichtung besteht.

Im einfachsten Fall kann eine derartige Vorrichtung zur stationären Prüfung von Fahrzeugen als Motorradrollenprüfstand aus einem derartigen Laufrollenmodul 1 bestehen, das in einer Prüfstandsgrube angeordnet und mit Zufahrtsplatten abgedeckt ist. In der Regel besteht ein Rollenprüfstand für Vierradfahrzeuge mit einer Antriebsachse vorzugsweise aus zwei Prüfstandsröllen, die durch zwei derartige Laufrollenmodule 1 gebildet werden können. Hingegen gestattet die Erfindung auch die Zusammenstellung von Vorrichtungen zum stationären Prüfen von vierradangetriebenen Fahrzeugen, bei der die Anordnung von vier einzelnen Laufrollenmodulen 1 in einer Baugrube so durchgeführt wird, daß sich unter jedem Fahrzeugrad ein Laufrollenmodul 1 befindet.

In Fig. 1 der Zeichnung ist ein Laufrollenmodul 1 seitlich dargestellt, das in Längsrichtung 6 der Laufrolle 3 in einer Baugrube angeordnet wird. Bei einem Pkw-Prüfstand werden mindestens zwei solcher Laufrollenmodule 1 seitlich nebeneinander vorgesehen und sind dann zur Prüfung einer Antriebsachse verwendbar. Dazu ist ein Tragrahmen 2 an jedem Laufrollenmodul 1 vorgesehen, an dem die Laufrolle 3 drehbar gelagert ist. Der Tragrahmen 2 besteht aus einem horizontalen rechteckigen oder quadratischen Grundrahmen 7, der aus vier verschweißten profilierten Grundträgern besteht. An diesem sind mindestens an einer Seite vertikale Trägerelemente 8 angebracht, die zur Aufnahme von Wellenlagern 9 dienen. In Fig. 1 und Fig. 2 der Zeichnung besitzt das Laufrollenmodul 1 nur an einer Rollenöffnungsseite vertikale Trägerelemente 8, die bei einer Ausbildung eines Pkw-Prüfstands vorzugsweise nach innen zum gegenüberliegenden Laufrollenmodul gerichtet sind. Bei einer weiteren Ausführungsart können aber auch zwei gegenüberliegend am Grundrahmen 7 angeordnete vertikale Trägerelemente 8 zur Aufnahme der Wellenlager 9 vorgesehen werden, die zwar statisch höher belastbar sind, aber bei der Zugänglichkeit Nachteile aufweisen.

An dem vertikalen Trägerelement 8 sind als Wellenlager 9 zwei dicht nebeneinander angeordnete Kugellager befestigt, in der die Drehwelle 10 der Laufrolle 3 drehbar gelagert ist. Als Wellenlager 9 können aber auch reibungsarme hydrostatische Lager eingesetzt werden. Die Laufrolle 3 besteht aus einer Rollenfelge 11, in dessen Zentrum eine Drehwelle 10 angeordnet ist. Vorzugsweise wird die Drehwelle 10 an die Rollenfelge 11 angeflanscht und ist somit fest mit dieser verbunden. Die Laufrolle 3 wird außen von einer zylindrischen Mantelfläche begrenzt, auf der sich die zu prüfenden Fahrzeugräder kraftschlüssig abstützen. Bei der Laufrolle 3 handelt es sich vorzugsweise um eine 48"-Laufrolle (ca. 1.220 mm Rollendurchmesser), die eine Mantelflächenbreite von ca. 25" bzw. 625 mm aufweist.

Im Innenbereich der Laufrolle 3 ist an der Mantelfläche ein scheibenförmiges vertikales Radelement 12 angeordnet, das die Mantelfläche mit der Drehwelle 10 oder dessen Flansch verbindet. An diesem scheibenförmigen vertikalen Radelement 12 ist im Bereich unter der Mantelfläche ein horizontal ausgerichtetes Ringelement 17 als Läufer einer elektrischen Maschine 4 angeordnet. An diesem Ringelement 17 sind vorzugsweise zwei Magnetringe 18 befestigt, die einen selbsterregten Läufer einer Synchronmaschine bilden. Diese Magnetringe 18 bestehen aus einer Vielzahl umfangsmäßig angeordneter Permanentmagneten, die einen Ringdurchmesser von ca. 800 bis 1000 mm 0 besitzen und eine Ringbreite von ca. 40 mm aufweisen. Je nach der erforderlichen Maschinenleistung sind zur Selbsterregung ein bis vier Magnetringe 18 vorgesehen, die für Maschinenleistungen bis 400 kW ausreichen.

Koaxial zum selbsterregten Maschinenläufer 17 ist ein ringförmiger Stator angebracht, der den Raum zwischen der Laufrollenmantelfläche und dem Ringelement 17 des Läufers ausfüllt. Dabei sind im Statorring 14 Nuten vorgesehen, in denen Kupferdrahtwicklungen 19 zur Erzeugung eines Drehfeldes angebracht sind. Der Statorring 14 besteht aus einem lamellenartigen Blechpaket aus ferromagnetischem Material wie es im Elektromaschinenbau üblich ist. Der Statorring 14 und der Läuferring 17 sind parallel zueinander ausgerichtet und nur durch einen schmalen Luftspalt voneinander beabstandet. Auch auf der gegenüberliegenden Seite ist der Statorring 14 nur über einen schmalen Luftspalt von der inneren Mantelfläche der Laufrolle 3 getrennt.

Der Statorring 14 ist seitlich an einer Statorscheibe 13 befestigt, die nahezu den gesamten Innenraum der Laufrolle 3 nach außen abdeckt. Im Zentrum der Statorscheibe 13 ist ein weiteres Kugellager 16 als Statorlager angeordnet, mit dem sich die Statorscheibe 13 auf der Drehwelle 10 des Läufers bzw. der Laufrolle 3 abstützt und dort gelagert ist. Die in den Statornuten angeordneten Kupferwicklungen 19 sind als Drehstromwicklungen ausgebildet und über drei Anschlußklemmen 15 auf der Statorscheibe 13 nach außen geführt, die zur Energieversorgung der elektrischen Maschine vorgesehen sind. Zur Drehzahl- und Belastungssteuerung wird diese Energieversorgung mit nicht dargestellten modernen IGBT-Umrichtern (Insulated Gate Bipolar Transistor) und elektronischen Steuermitteln verbunden.

Am Tragrahmen und auf der Außenfläche der Statorscheibe sind noch Befestigungsmittel 20 vorgesehen, mit der sich die Statorscheibe 13 über die Kraftmeßvorrichtung 5 pendeln gegenüber dem Tragrahmen 2 abstützt. Mit Hilfe der Kraftmeßvorrichtung 5 wird unter Berücksichtigung der Hebelarmverhältnisse das Drehmoment der Synchronmaschine 4 ermittelt. Allerdings könnte zwischen dem Läufer und dem Stator der Synchronmaschine auch eine direkte Drehmomentmeßvorrichtung angeordnet sein, wobei der Stator dann aber fest mit dem Tragrahmen 2 verbunden sein müßte.

Die elektrische Maschine 4 könnte auch in ähnlicher Weise als Asynchronmaschine ausgebildet sein, wobei der Läufer dann in bekannter Weise als Käfigläufer vorzusehen wäre. In die Laufrolle 3 könnte bei gleicher Art der Maschinenintegration auch eine kollektorbeinhaltete Gleich- oder Wechselstrommaschine angeordnet sein. In der Praxis hat sich aber eine selbsterregte Synchronmaschine als integrierte elektrische Maschine 4 bewährt, die über eine hohe Leistungsdichte von ca. 250 bis 400 kW pro Laufrollenmodul 1 verfügt und weitgehend verschleißfrei und wartungsarm läuft.

Derartige Laufrollenmodule 1 werden vorzugsweise zur Leistungsmessung oder als Abgasprüfstände eingesetzt, wozu noch ein nicht dargestellter Drehzahlaufnehmer an der Drehwelle 19 vorgesehen ist, mit dessen Hilfe und den IGBT-Umrichtern die Motordrehzahl sehr genau vorgebbar ist. In einem derartigen Laufrollenmodul 1 ist die Synchronmaschine 4 sowohl generatorisch als auch motorisch betreibbar, was sich lediglich durch die vorgegebene Prüfaufgabe und Ansteuerung ergibt.

Durch die doppelte Wellenlagerung 9 auf einer Seite des Rollenmoduls 1 ist sowohl der Synchronmotor 4 als auch die Kraftmeßvorrichtung 5 von einer und die Wellenanordnung 10 von der anderen Modulseite gut zugänglich erreichbar. Im Falle eines Motorschadens ist auf einfache Weise dieser von der abnehmbaren Statorscheibe 13 reparierbar, ohne daß der gesamte Prüfstand in seine Einzelteile demontiert werden müßte. Beim Einbau eines derartigen Laufrollenmoduls 1 in eine Baugrube kann deshalb auf einfache Weise die gewünschte Erreichbarkeit nach der vorliegenden Baugrubengröße ausgewählt werden. Dabei kann die Statorscheibe 13 sowohl nach innen wie auch nach außen gerichtet werden.

Bei der Anordnung eines doppelten Laufrollenmoduls 1 zur Prüfung einer Fahrzeugachse wird gegenüber einer Mittelmotormaschine die Maschinenleistung etwa verdoppelt, so daß pro Fahrzeugachse etwa 800 kW Maschinenleistung zur Verfügung steht, mit der auch sehr leistungsstarke Fahrzeuge prüfbar sind. Da in diesen Fällen beide Laufrollenmodule 1 auch separat in der Drehzahl und Leistung gesteuert werden können, ist mit einem derartigen Prüfstand auch eine Simulation von Kurvenfahrten und dergleichen möglich. Da bei dieser Bauweise zwischen den Laufrollen 3 noch erheblicher Bauraum zur Verfügung steht, kann dieser als Zugang zum Wagenboden oder für andere spezielle Vorrichtungen genutzt werden. Für eine Klimaprüfung und dergleichen können deshalb in dem Zwischenraum Kühlluftkanäle oder Heizmatten zur Wärmebestrahlung des Fahrzeugunterbodens installiert werden.

Je nach Prüfaufgabe ist es auch nicht immer nötig, separat drehende Laufrollen 3 vorzusehen. In diesem Fall bietet sich eine mechanische Verbindung über eine gemeinsame Drehwelle 10 zwischen zwei Laufrollenmodulen 1 an. In diesen Fällen ist eine elektronische Synchronisation beider Laufrollenmodule 1 entbehrlich. Dabei ist es je nach benötigter Leistung auch möglich, nur eine der Laufrollenmodule 1 mit einer Maschineneinheit 4 auszustatten, wodurch der Aufwand erheblich reduziert werden kann. Mit einer derartigen Anordnung mit einer Maschineneinheit 4 kann auch eine schaltbare Wellenkupplung vorgesehen werden, durch den der Prüfstand sowohl als Pkw- als auch als Motorradprüfstand nutzbar ist, da auf diese Weise die Prüfstandsgrundmasse für den Motorradbetrieb entsprechend reduziert werden kann. Für spezielle Prüfaufgaben kann es auch vorteilhaft sein, in die angekuppelte freie Laufrolle 1 eine passive Leistungsbremse wie beispielsweise eine Wirbelstrombremse einzubauen. Bei der Bemessung der beiden Synchronmaschinen 4 kann die maximal notwendige Leistung auch auf zwei Laufrollerumodule 1 aufgeteilt werden, so daß für geringere und mittlere Prüfleistungen jeweils nur eine Maschine genutzt wird. Durch die Ausnutzung der jeweils höheren Leistungsbereiche ist damit insgesamt die Meßgenauigkeit auf einfache Weise erhöhbar.

Bei der Anordnung einer Vorrichtung zur stationären Prüfung von Fahrzeugen mit gleichartigen Laufrollenmodulen 1 mit integrierten elektrischen Maschinen 4 können mindestens zwei auch auf einem gemeinsamen Rahmen vorgesehen werden. Dabei können auch Verschiebevorrichtungen am Rahmen angeordnet werden, durch den die Spurweite einer Achse oder der Achsabstand zwischen zwei Achsen einstellbar ist. Bei einer weiteren besonderen Ausbildung, bei dem zwischen einer gemeinsamen Verbindungswelle 10 zwei redundante Antriebe vorgesehen sind, können diese vorteilhafterweise auch zur Selbstdiagnose genutzt werden. Dabei kann einer der elektrischen Maschinen 4 als Belastungseinheit für die andere dienen. Damit ist jederzeit ein Selbsttest des Prüfstands ohne Fahrzeug möglich. Insbesondere können damit variierende Fahrzeugzugkräfte simuliert werden, wodurch auch eine Bewertung des dynamischen Verhaltens des Prüfstands möglich wird.

## Patentansprüche

1. Vorrichtung zur stationären Prüfung von Fahrzeugen mit mindestens einer Laufrolle (3) , die mit einer elektrischen Maschine (4) verbunden ist, wobei eine Kraft- (5) oder Drehmomentmeßvorrichtung vorgesehen ist, durch die das Drehmoment zwischen der in einer Laufrolle (3) oder einer der Laufrollen (3) integrierten elektrischen Maschine (4) und mindestens einer Laufrolle (3) erfaßt wird, wobei ein innen liegender Teil der Laufrolle (3) als Läufer der elektrischen Maschine (4) ausgebildet ist, **dadurch gekennzeichnet, dass** die Laufrolle (3) ein vertikales scheibenförmiges Radelement (12) aufweist, das etwa in der Mitte zwischen den beiden Felgenöffnungsseiten der Laufrolle (3) angeordnet ist und der Läufer als ein horizontales nach außen gerichtetes Ringelement (17) ausgebildet ist, das am vertikalen Radelement (12) befestigt ist.

2. Vorrichtung zur stationären Prüfung von Fahrzeugen nach Anspruch 1, **dadurch gekennzeichnet, daß** ein im Innenbereich der Laufrolle (3) auf der Drehwelle (10) des Läufers ein Stator pendelnd gelagert ist und sich gegenüber einem Tragrahmen (7) oder einem anderen ortsfesten Geräteteil über eine Kraftmeßvorrichtung (5) abstützt.

3. Vorrichtung zur stationären Prüfung von Fahrzeugen nach Anspruch 1 oder 2, **dadurch gekennzeichnet, dass** das horizontal ausgerichtetes Ringelement (17) des Läufers zumindest teilweise aus permanentmagnetischem Material (18) besteht und koaxial von einem Statorring (14) umgeben ist und dass der Statorring (14) mit der Kraftmessvorrichtung (5) verbunden ist.

4. Vorrichtung zur stationären Prüfung von Fahrzeugen nach einem der vorhergehenden Ansprüche, **dadurch gekennzeichnet, daß** das Ringelement (17) des Läuferrings mindestens ein Ringteil (18) enthält, das aus einer Vielzahl von nebeneinander angeordneten Permanentmagneten besteht.

5. Vorrichtung zur stationären Prüfung von Fahrzeugen nach einem der vorhergehenden Ansprüche, **dadurch gekennzeichnest, daß** die Laufrolle (3) aus einer zylinderförmigen Laufrollenfelge (11) und einer Drehwelle (10) besteht, die durch ein vertikales scheibenförmiges Radelement (12) als Teil des Läufers verbunden sind.

6. Vorrichtung zur stationären Prüfung von Fahrzeugen nach Anspruch 5, **dadurch gekennzeichnet, daß** die Drehwelle (10) fest oder mit einem Flansch am scheibenförmigen Radelement (12) angeordnet ist, wobei die Drehwelle (10) einseitig oder zweiseitig am Tragrahmen (2) gelagert ist.

7. Vorrichtung zur stationären Prüfung von Fahrzeugen nach Anspruch 6, **dadurch gekennzeichnet, daß** die einseitige Lagerung aus zwei nebeneinander angeordneten Kugel- (9) oder hydrostatischen Drehlagern besteht, die die Laufrolle (3) an einer Felgenöffnungsseite horizontal tragen.

8. Vorrichtung zur stationären Prüfung von Fahrzeugen nach Anspruch 3, **dadurch gekennzeichnet, daß** der Statorring (14) im Zwischenraum zwischen dem Ringelement (17) des Läufers und der inneren Mantelfläche der Laufrollenfelge (11) angeordnet ist und von beiden durch einen geringen Luftspalt getrennt wird.

9. Vorrichtung zur stationären Prüfung von Fahrzeugen.nach Anspruch 3, **dadurch gekennzeichnet, daß** der Stator aus einer Statorscheibe (13) und dem daran befestigten Statorring (14) besteht, wobei in Nuten des Statorrings (14) elektrische Wicklungen (19) zur Erzeugung eines Drehfelds einer Synchronmaschine angeordnet sind.

10. Vorrichtung zur stationären Prüfung von Fahrzeugen nach Anspruch 9, **dadurch gekennzeichnet, daß** die Statorscheibe (13) an einer Rollen- bzw. Felgenöffnungsseite angeordnet und in ihrem Zentrum auf der Drehwelle (10) pendelnd gelagert ist.

11. Vorrichtung zur stationären Prüfung von Fahrzeugen nach Anspruch 9, **dadurch gekennzeichnet, daß** an der Statorscheibe (13) Befestigungsmittel (20) vorgesehen sind, an der sich die Kraftmeßvorrichtung (5) gegenüber dem Tragrahmen (2) abstützt.

12. Vorrichtung zur stationären Prüfung von Fahrzeugen nach einem der vorhergehenden Ansprüche, **dadurch gekennzeichnet, daß** eine Laufrolle (3) mit einer integrierten elektrischen Maschine (4), die auf einem Tragrahmen (2) gelagert ist, ein Laufrollenmodul (1) darstellt, wobei aus ein bis vier Laufrollenmodulen (1) Rollenprüfatände für Motorräder und/oder Personenkraftwagen mit ein oder zwei Antriebsachsen ausbildbar sind.

13. Vorrichtung zur stationären Prüfung von Fahrzeugen nach Anspruch 12, **dadurch gekennzezchnet, daß** aus zwei nebeneinander angeordneten Laufrollenmodulen (1) ein Fahrzeugprüfstand für Kraftfahrzeuge mit einer Antriebsachse gebildet ist, wobei die Laufrollenmodule (1) so angeoxdnet sind, daß die elektrischen Maschinen (4) nach innen oder nach außen gerichtet sind.

14. Vorrichtung zur stationären Prüfung von Fahrzeugen nach Anspruch 13, **dadurch gekennzeichnet, daß** die beiden Laufrollenmodule (1) über eine gemeinsame Drehwelle (10) starr oder zuschaltbar miteinander gekuppelt sind, wobei in mindestens einer Laufrolle (3) eine elektrische Maschine (4) integriert ist.

15. Vorrichtung zur stationären Prüfung von Fahrzeugen nach Anspruch 14, **dadurch gekennzeichnet, daß** die zwei nebeneinander angeordneten Laufrollenmodule (1) auf einem seitlich verstellbaren Rahmen zur Einstellung unterschiedlicher Spurweiten angeordnet sind.

16. Vorrichtung zur stationären Prüfung von Fahrzeugen nach einem der vorhergehenden Ansprüche, **dadurch gekennzeichnet, daß** für einen Zweiachs- bzw. Allradrollenprüfstand vier Laufrollenmodule (1) vorgesehen sind, wobei der Achsabstand unterschiedlicher Fahrzeuge durch die Anordnung auf längsverstellbaren Rahmenteilen einstellbar ist.

17. Vorrichtung zur stationären Prüfung von Fahrzeugen nach einem der vorhergehenden Ansprüche, **dadurch gekennzeichnet, daß** die in die Laufrolle (3) integrierte elektrische Maschine (4) als Gleich-, Wechselstrommaschine oder passive Leistungsbremse wie zum Beispiel Wirbelstrombremse oder Hydraulikbremse ausgebildet ist.

18. Vorrichtung zur stationären Prüfung von Fahrzeugen nach einem der vorhergehenden Ansprüche, **dadurch gekennxeichnet, daß** die Laufrollen (3) einen Außendurchmesser von ca. 1219 mm (48") oder 1829 mm (72") und mindestens eine Breite von 315 mm (12, 5") aufweisen.

## Claims

1. Device for stationary testing of vehicles, comprising at least one roller (3), which is connected to an electric motor (4), with a load (5) or a torque measuring device being provided, by which the torque is captured between the electric motor (4) integrated in the roller (3) or in one of the rollers (3) and at least one roller (3), wherein an interior portion of the roller (3) is designed as rotor of the electric motor (4), **characterized in that** the roller (3) is provided with a vertical, disk-shaped wheel element (12), which is arranged approximately in the middle between the two rim opening sides of the roller (3), and **in that** the rotor is designed as a horizontal, outwardly directed ring element (17) which is fixed to the vertical wheel element (12).

2. Device for stationary testing of vehicles according to claim 1, **characterized in that** in the interior area of the roller (3), a stator is cradle-mounted on the rotary shaft (10) of the rotor and **in that** said stator is supported on a carrying frame (5) or another stationary equipment section via a load measuring device (5).

3. Device for stationary testing of vehicles according to claim 1 or 2, **characterized in that** the horizontally arranged ring element (17) of the rotor consists, at least in part, of permanent magnetic material (18) and is coaxially surrounded by a stator ring (14), and **in that** said stator ring (14) is connected to the load measuring device (5).

4. Device for stationary testing of vehicles according to one of the preceding claims, **characterized in that** the ring element (17) of the rotor ring comprises at least one ring section (18) which consists of a multitude of permanent magnets arranged side by side.

5. Device for stationary testing of vehicles according to one of the preceding claims, **characterized in that** the roller (3) comprises a cylindrical roller rim (11) and a rotary shaft (10), which are connected by means of a vertical, disk-shaped wheel element (12) as part of the rotor.

6. Device for stationary testing of vehicles according to claim 5, **characterized in that** the rotary shaft (10) is arranged on the disk-shaped wheel element (12) either rigidly or by means of a flange, and **in that** said rotary shaft (10) is mounted at one or both ends on the carrying frame (2).

7. Device for stationary testing of vehicles according to claim 6, **characterized in that** the one-end mounting comprises two ball bearings (9) or hydrostatic pivot bearings arranged side by side, which carry the roller (3) horizontally on one rim opening side.

8. Device for stationary testing of vehicles according to claim 3, **characterized in that** the stator ring (14) is arranged in the gap between the ring element (17) of the rotor and the inner surface of the roller rim (11) and **in that** it is separated from both by a narrow air gap.

9. Device for stationary testing of vehicles according to claim 3, **characterized in that** the stator comprises a stator disk (13) and a stator ring (14) attached to said stator disk, wherein electrical windings (19) for generation of a rotating field of a synchronous machine are arranged in grooves of the stator ring (14).

10. Device for stationary testing of vehicles according to claim 9, **characterized in that** the stator disk (13) is arranged on a roller or rim opening side and **in that** in its centre, said stator disk is cradle mounted on the rotary shaft (10).

11. Device for stationary testing of vehicles according to claim 9, **characterized in that** on the stator disk (13), fixing means (20) are provided, on which the load measuring device (5) is supported on the carrying frame (2).

12. Device for stationary testing of vehicles according to one of the preceding claims, **characterized in that** a roller (3), together with an integrated electric motor (4), which is mounted on a carrying frame (2), constitutes a roller assembly (roller module) (1), and **in that** roller test stands for motorcycles and/or passenger cars with one or two driving axles may be built by using one to four roller assemblies (roller modules) (1).

13. Device for stationary testing of vehicles according to claim 12, **characterized in that** a vehicle test stand for motor vehicles with one driving axle is created by two roller assemblies (roller modules) (1) arranged side by side, the roller assemblies (roller modules) (1) being arranged in such a way that the electric motors (4) are directed either to the inside or to the outside.

14. Device for stationary testing of vehicles according to claim 13, **characterized in that** the two roller assemblies (roller modules) (1) are coupled to each other, via a common rotary shaft (10), either rigidly or so as to be connectable, wherein an electric motor (4) is integrated in at least one roller (3).

15. Device for stationary testing of vehicles according to claim 14, **characterized in that** the two roller assemblies (roller modules) (1) arranged side by side are located on a laterally adjustable frame, with the help of which different track widths may be set.

16. Device for stationary testing of vehicles according to one of the preceding claims, **characterized in that** four roller assemblies (roller modules) (1) are used to create a two-axle or all-wheel roller test stand, wherein the wheelbase (centre distance) of different vehicles can be set due to arrangement on longitudinally adjustable frame parts.

17. Device for stationary testing of vehicles according to one of the preceding claims, **characterized in that** the electric motor (4) integrated into the roller (3) is designed as a d.c. machine, an a.c. machine or as a passive dynamometer such as an eddy-current dynamometer or hydraulic dynamometer.

18. Device for stationary testing of vehicles according to one of the preceding claims, **characterized in that** the rollers (3) have an outer diameter of approximately 1219 mm (48") or 1829 mm (72") and a width of at least 315 mm (12.5").

## Revendications

1. Dispositif pour le contrôle stationnaire des véhicules, comportant au moins une roue mobile (3) qui est reliée à une machine électrique (4), un dispositif de mesure des forces (5) ou de mesure du couple étant prévu, lequel enregistre le couple de rotation entre la machine électrique (4), intégrée dans une roue mobile (3) ou dans une des roues mobiles (3), et au moins une des roues mobiles (3), une partie intérieure de la roue mobile (3) étant réalisée sous forme de rotor de la machine électrique (4), **caractérisé en ce que** la roue mobile (3) comporte un élément de roue (12) vertical en forme de disque, qui est disposé à peu près au milieu entre les deux côtés ouverts de la jante de la roue mobile (3), et le rotor est réalisé sous la forme d'un élément annulaire (17) horizontal dirigé vers l'extérieur, lequel est fixé à l'élément de roue (12) vertical.

2. Dispositif pour le contrôle stationnaire des véhicules selon la revendication 1, **caractérisé en ce qu'**un stator est monté en palier oscillant sur l'arbre de rotation (10) du rotor dans la zone intérieure de la roue mobile (3), et prend appui, par l'intermédiaire d'un dispositif de mesure des forces (5), en regard d'un bâti (7) ou d'un autre élément fixe de l'appareil.

3. Dispositif pour le contrôle stationnaire des véhicules selon la revendication 1 ou 2, **caractérisé en ce que** l'élément annulaire (17), orienté horizontalement, du rotor est réalisé au moins en partie dans un matériau (18) à aimantation permanente et est entouré coaxialement par un anneau de stator (14), et **en ce que** l'anneau de stator (14) est relié au dispositif de mesure des forces (5).

4. Dispositif pour le contrôle stationnaire des véhicules selon l'une quelconque des revendications précédentes, **caractérisé en ce que** l'élément annulaire (17) de l'anneau du rotor contient au moins une pièce annulaire (18) qui est formée par une pluralité d'aimants permanents disposés les uns à côté des autres.

5. Dispositif pour le contrôle stationnaire des véhicules selon l'une quelconque des revendications précédentes, **caractérisé en ce que** la roue mobile (3) est constituée d'une jante (11) cylindrique et d'un arbre de rotation (10) qui sont reliés par un élément de roue (12) vertical en forme de disque en tant que partie du rotor.

6. Dispositif pour le contrôle stationnaire des véhicules selon la revendication 5, **caractérisé en ce que** l'arbre de rotation (10) est agencé de manière fixe ou avec une bride à l'élément de roue (12) en forme de disque, l'arbre de rotation (10) étant monté sur un côté ou sur deux côtés sur le bâti (2).

7. Dispositif pour le contrôle stationnaire des véhicules selon la revendication 6, **caractérisé en ce que** le montage sur un côté est constitué de deux roulements à billes (9) ou paliers hydrostatiques, qui portent horizontalement la roue mobile (3) sur un côté ouvert de la jante.

8. Dispositif pour le contrôle stationnaire des véhicules selon la revendication 3, **caractérisé en ce que** l'anneau de stator (14) est disposé dans l'espace intermédiaire entre l'élément annulaire (17) du rotor et la surface intérieure de la jante (11) et est séparé des deux par un faible entrefer.

9. Dispositif pour le contrôle stationnaire des véhicules selon la revendication 3, **caractérisé en ce que** le stator est constitué d'un disque (13) et de l'anneau de stator (14) fixé à celui-ci, des enroulements électriques (19) étant disposés dans des rainures de l'anneau de stator (14) pour générer un champ magnétique rotatif d'une machine synchrone.

10. Dispositif pour le contrôle stationnaire des véhicules selon la revendication 9, **caractérisé en ce que** le disque de stator (13) est disposé au niveau d'un côté ouvert de la roue ou de la jante et est monté en palier oscillant en son centre sur l'arbre de rotation (10).

11. Dispositif pour le contrôle stationnaire des véhicules selon la revendication 9, **caractérisé en ce que** sur le disque de stator (13) sont prévus des moyens de fixation (20), sur lesquels le dispositif de mesure des forces (5) prend appui en regard du bâti (2).

12. Dispositif pour le contrôle stationnaire des véhicules selon l'une quelconque des revendications précédentes, **caractérisé en ce qu'**une roue mobile (3) avec une machine électrique (4) intégrée, laquelle est montée sur un bâti (2), constitue un module de roue (1), un à quatre modules de roue (1) permettant de réaliser des bancs d'essais pour motocycles et/ou véhicules de tourisme avec un ou deux essieux moteurs.

13. Dispositif pour le contrôle stationnaire des véhicules selon la revendication 12, **caractérisé en ce qu'**un banc d'essai pour véhicules à moteur avec un essieu moteur est formé par deux modules de roue (1) disposés l'un à côté de l'autre, les modules de roue (1) étant disposés de telle sorte que les moteurs électriques (4) sont dirigés vers l'intérieur ou vers l'extérieur.

14. Dispositif pour le contrôle stationnaire des véhicules selon la revendication 13, **caractérisé en ce que** les deux modules de roue (1) sont reliés l'un à l'autre de manière rigide ou enclenchable par l'intermédiaire d'un arbre de rotation (10) commun, une machine électrique (4) étant intégrée dans au moins une des roues mobiles (3).

15. Dispositif pour le contrôle stationnaire des véhicules selon la revendication 14, **caractérisé en ce que** les deux modules de roue (1) disposés l'un à côté de l'autre sont montés sur un châssis réglable en largeur pour le réglage de différents écartements des roues.

16. Dispositif pour le contrôle stationnaire des véhicules selon l'une quelconque des revendications précédentes, **caractérisé en ce que** quatre modules de roue (1) sont prévus pour un banc d'essai pour véhicules à deux essieux ou véhicules à quatre roues motrices, l'écartement des roues des différents véhicules pouvant être réglé par l'agencement sur des parties de châssis réglables en longueur.

17. Dispositif pour le contrôle stationnaire des véhicules selon l'une quelconque des revendications précédentes, **caractérisé en ce que** la machine électrique (4) intégrée dans la roue mobile (3) est réalisée sous la forme d'une machine à courant continu ou d'un frein de puissance passif, tel qu'un frein à courant de Foucault ou un frein hydraulique.

18. Dispositif pour le contrôle stationnaire des véhicules selon l'une quelconque des revendications précédentes, **caractérisé en ce que** les roues mobiles (3) ont un diamètre extérieur d'environ 1 219 mm (48") ou 1 829 mm (72") et au moins une largeur de 315 mm (12,5").
